# EUROPÄISCHE PATENTSCHRIFT

(11) **EP 2 102 027 B1**
(45) Veröffentlichungstag und Bekanntmachung des Hinweises auf die Patenterteilung: **23.03.2011**
(21) Anmeldenummer: 07846938.4
(22) Anmeldetag: 01.12.2007
(51) Int. Cl.: B60K 35/00, G06F 3/048

(54) **KRAFTFAHRZEUG**
MOTOR VEHICLE
VÉHICULE AUTOMOBILE

(30) Priorität: 11.12.2006 DE 102006058214
(43) Veröffentlichungstag der Anmeldung: 23.09.2009
(73) Patentinhaber: Bayerische Motoren Werke Aktiengesellschaft, 80809 München (DE)
(72) Erfinder: KESSLER, Roger, 81371 Muenchen (DE); KERNEBECK, Bernd, 80339 Muenchen (DE)
(74) Vertreter: Mayer-Martin, Christian
(86) Internationale Anmeldenummer: PCT/EP2007/010449
(87) Internationale Veröffentlichungsnummer: WO 2008/071316

(56) Entgegenhaltungen:
- EP-A- 1 045 225
- DE-A1- 10 144 752
- DE-A1- 10 330 613
- DE-B3- 10 302 924
- US-A1- 2003 023 350
- US-A1- 2005 076 308

## Beschreibung

Die Erfindung betrifft eine ein Kraftfahrzeug, insbesondere ein Kraftfahrzeug mit einer Anzeigeeinrichtung und einem Medienwiedergabegerät.

Die rasante technologische Entwicklung auf dem Gebiet der Kraftfahrzeugtechnik führt derzeit zur Integration von Mehrkanal-Audioanlagen in Kraftfahrzeuge.

Als Speicherformat für Mehrkanal-Audiodaten finden derzeit im Wesentlichen die folgenden Formate Einsatz:
- DVD-Audio,
- DVD-Video,
- SACD (Super Audio Compact Disc),
- DTS-CD.

Da sich allerdings am Markt derzeit Speichermedien durchsetzen, auf denen Medien im DVD-Video-Format abgespeichert sind, besteht der Wunsch, solche Speichermedien auch in Kraftfahrzeugen zur Wiedergabe von Mehrkanal-Audioinhalten verwenden zu können.

Allerdings wurde bei der Standardisierung des DVD-Video-Formates davon ausgegangen, dass die Wiedergabe von in diesem Format abgespeicherten Audio- und Videoinhalten stets unter Verwendung einer Videoanzeige, beispielsweise für eine Inhaltsübersicht oder für ein Auswahlmenü, erfolgt. Auch Titelnamen sind dabei beispielsweise nicht als Textdaten sondern als Videodaten oder Bilddaten abgespeichert. Eine Videoanzeige ist in Kraftfahrzeugen während der Fahrt aber aus Sicherheitsgründen in der Regel nicht gestattet oder gesperrt. Daher ist das Abspielen einer DVD-Video oder die Bedienung eines DVD-Video-Abspielgerätes insbesondere in einem Kraftfahrzeug bislang mit Schwierigkeiten oder Komforteinbussen verbunden.

Aus der gattungsbildenden US2003/0023350 ist ein Fahrzeug-Computer mit kompletter oder limitierter Bildschirmdarstellung bekannt.

Aus der EP1045225 ist es bekannt, während der Fahrt eine Animationsdarstellung zu unterdrücken.

Der Erfindung liegt die Aufgabe zu Grunde, eine technische Lehre anzugeben, durch welche die Wiedergabe, insbesondere die Auswahl, von Medienobjekten, die - insbesondere gemäß dem DVD-Video-Standard - auf einem Speichermedium abgespeichert sind, ermöglicht wird.

Diese Aufgabe wird durch die Merkmale des unabhängigen Anspruchs gelöst. Vorteilhafte Weiterbildungen der Erfindung sind den abhängigen Ansprüchen zu entnehmen.

Die Erfindung beruht demnach auch auf dem Gedanken, den Zugriff auf Medienobjekte, die auf einem Speichermedium gespeichert sind, in einem Kraftfahrzeug während des Stillstandes des Kraftfahrzeuges über die Anzeige und Auswahl zweiter Menüanzeigeobjekte zu realisieren und während der Fahrt des Kraftfahrzeuges über die Anzeige und Auswahl erster - von den zweiten Menüanzeigeobjekten verschiedenen - Menüanzeigeobjekte zu realisieren. Dabei sind die zweiten Menüanzeigeobjekte auf eine Art darstellbar, die für das Speichermedium spezifisch ist und/oder die ersten Menüanzeigeobjekte auf eine Art darstellbar, die für das Fahrzeug, insbesondere die Steuereinrichtung, spezifisch ist.

Dadurch wird erreicht, dass ein Fahrer oder Nutzer während des Stillstandes des Kraftfahrzeuges komfortabel und intuitiv über die Anzeige und Auswahl der gewohnten und eigentlich für diesen Zweck vorgesehenen Menüanzeigeobjekte auf Medienobjekte zugreifen kann, während er während der Fahrt des Kraftfahrzeuges über die Anzeige und Auswahl besonders leicht erkennbarer und auswählbarer Menüanzeigeobjekte gezielt auf Medienobjekte zugreifen kann, ohne zu stark vom Verkehrsgeschehen abgelenkt zu werden.

Vorzugsweise umfasst ein Kraftfahrzeug dazu eine Anzeigeeinrichtung, wie ein Grafikdisplay, und ein Medienwiedergabegerät zur Wiedergabe von auf einem Speichermedium, wie einer DVD (Digital Versatile Disc), HD-DVD o der Blu-ray Disc, gespeicherten Medienobjekten, wie Audioobjekten (z.B. Musikstücke) oder Videoobjekten (z.B. Filme).

Das Medienwiedergabegerät ist beispielsweise in der Lage, Daten von dem Speichermedium zu lesen und entsprechend aufbereitet an Ausgabegeräte, wie eine Anzeigeeinrichtung, eine Verstärkereinrichtung oder mehrere Lautsprechereinrichtungen auszugeben. Eine Steuereinrichtung, beispielsweise eine programmgesteuerte Prozessoreinrichtung, ist derart eingerichtet, dass während der Fahrt des Kraftfahrzeuges automatisch erste Menüanzeigeobjekte auf der Anzeigeeinrichtung dargestellt werden, und während des Stillstandes des Kraftfahrzeuges automatisch zweite Menüanzeigeobjekte auf der Anzeigeeinrichtung dargestellt werden, wobei die ersten und die zweiten Menüanzeigeobjekte vorzugsweise verschieden sind.

Vorzugsweise werden während der Fahrt des Kraftfahrzeuges automatisch die zweiten Menüanzeigeobjekte nicht dargestellt, und/oder während des Stillstandes des Kraftfahrzeuges automatisch die ersten Menüanzeigeobjekte nicht dargestellt werden. Neben ersten und zweiten Menüanzeigeobjekten können selbstverständlich weitere Menüanzeigeobjekte existieren, die während der Fahrt und während des Stillstandes dargestellt werden. Der Begriff "Stillstand" ist im Rahmen der Erfindung weit auszulegen. So kann beispielsweise ein langsam fahrendes Fahrzeug in sinne der Erfindung immer noch "still stehen". Die automatische Umschaltung zwischen den beiden verschiedenen Anzeigemodi kann beispielsweise durch ein Unter- bzw. Überschreiten einer vorgegebenen Grenzgeschwindigkeit, von beispielsweise 3km/h, ausgelöst werden.

Besonders bevorzugt ist vorgesehen, dass durch die Markierung und/oder Auswahl eines Menüanzeigeobjektes die Wiedergabe eines Medienobjektes mittelbar oder unmittelbar ausgelöst wird. Die Markierung und/oder Auswahl erster und/oder zweiter Menüanzeigeobjekte erfolgt vorzugsweise durch eine gemeinsame Eingabeeinrichtung, wie einen Dreh-Druckknopf. So wird beispielsweise auf das gleiche Medienobjekt während der Fahrt durch Markierung und/oder Auswahl eines ersten Menüanzeigeobjektes zugegriffen und während des Stillstandes durch Markierung und/oder Auswahl eines zweiten - vom ersten verschiedenen - Menüanzeigeobjektes zugegriffen. Insbesondere während der Fahrt ist ein Zugriff auf das Medienobjekt durch Markierung und/oder Auswahl eines zweiten Menüanzeigeobjektes nicht möglich, insbesondere da dieses gar nicht dargestellt wird.

Gemäß einer besonders bevorzugten Ausführungsvariante ist vorgesehen, dass jeweils einem Medienobjekt zumindest ein Menüanzeigeobjekt zugeordnet ist.

Vorzugsweise basieren die zweiten Menüanzeigeobjekte auf einem Video-format oder sind in einem Videoformat abgespeichert. Entsprechend können die zweiten Menüanzeigeobjekte als Video dargestellt werden. Alternativ oder ergänzend dazu werden die zweiten Menüanzeigeobjekte auf eine Art dargestellt, die für auf dem Speichermedium abgespeicherten Daten spezifisch ist. Die Darstellung eines zweiten Menüanzeigeobjektes ist vorzugsweise im Wesentlichen unabhängig von dem Medienwiedergabegerät. Die Größe der Darstellung kann aber selbstverständlich von der Art oder der Größe der Anzeigeeinrichtung abhängen. Vorzugsweise erfolgt die Darstellung eines zweiten Menüanzeigeobjektes entsprechend der Darstellung auf einem Fernsehgerät in Verbindung mit einem Home-Entertainment-System.

Im Gegensatz dazu werden erfindungs gemäss ersten Menüanzeigeobjekte auf eine Art dargestellt, die für das für das Fahrzeug, insbesondere die Steuereinrichtung, spezifisch ist. Die Darstellung eines ersten Menüanzeigeobjektes an sich ist vorzugsweise im Wesentlichen, beispielsweise abgesehen von der Anzahl oder Position der Menüanzeigeobjekte, unabhängig von dem Speichermedium oder den darauf abgespeicherten Daten. Dadurch kann ein Fahrzeughersteller den Zugriff auf Medienobjekte während der Fahrt mittels Anzeige und Auswahl von Menüanzeigeobjekten ermöglichen, wobei die Menüanzeigeobjekte (erste Menüanzeigeobjekte) hinsichtlich Größe oder Aussehen daran angepasst sind, dass ein Fahrer sie während der Fahrt auf dem Display eines Fahrzeuges schnell und sicher erfassen und markieren kann.

Insbesondere sind jeweils die Umrisse oder die Gestalt der ersten Menüanzeigeobjekte bestimmt durch eine Steuereinrichtung oder Speichereinrichtung des Fahrzeuges (definiert durch einen Fahrzeugentwickler), wohingegen jeweils die Umrisse oder die Gestalt der zweiten Menüanzeigeobjekte bestimmt sind durch Daten auf dem Speichermedium (definiert durch den Urherber oder Verlag des Speichermediums .)

Besonders vorteilhaft ist die Erfindung, wenn die Medienobjekte gemäß dem DVD-Video-Standard oder einem davon abgeleiteten Standard auf dem Speichermedium abgespeichert sind. Denn dann werden die eigentlich für die Auswahl von Medienobjekten vorgesehen Menüanzeigeobjekte (zweite Menüanzeigeobjekte) im Rahmen einer Auswahlmenüanzeige automatisch als Video dargestellt oder auf eine Art dargestellt, die für das Speichermedium spezifisch ist. Eine solche Darstellung ist für eine Auswahl von Medienobjekten während der Fahrt nicht zugelassen und/oder nicht geeignet, da beispielsweise die Menüanzeigeobjekte zu klein oder zu unübersichtlich dargestellt werden. Ein Medienobjekt kann auf einer DVD-Video beispielsweise ein so genannter Titel oder ein so genanntes Kapitel sein.

Vorzugsweise umfassen die Medienobjekte Audioobjekte und Videoobjekte, wobei die Steuereinrichtung, die auch einen Teil des Medienwiedergabegerätes und/oder der Anzeigeeinrichtung umfassen kann, derart eingerichtet ist, dass das Medienwiedergabegerät oder die Anzeigeeinrichtung während der Fahrt des Kraftfahrzeuges für die Wiedergabe der Videoobjekte gesperrt ist. Ein besonderes Videoobjekt ist vorzugsweise ein Menüvideoobjekt, das die Darstellung von zweiten Menüanzeigeobjekten umfasst oder ermöglicht.

Vorteilhafterweise sind auf dem Speichermedium Namen von Medienobjekten und/oder die Anzahl von Medienobjekten abgespeichert, wobei zumindest ein zweites Menüanzeigeobjekt oder alle zweiten Menüanzeigeobjekte auch auf dem Namen eines Medienobjektes basieren, insbesondere diesen Namen wiedergeben, und wobei zumindest ein erstes Menüanzeigeobjekt, das vorzugsweise dem gleichen Medienobjekt wie das zweite Menüanzeigeobjekt zugeordnet ist, oder alle ersten Menüanzeigeobjekte nicht auf dem Namen eines Medienobjektes basieren, insbesondere diesen nicht wiedergeben. Insbesondere ein erstes Menüanzeigeobjekt kann dabei dagegen auf der Anzahl von Medienobjekten basieren, insbesondere die Anzahl von auf dem Speichermedium gespeicherten Medienobjekten oder die Nummer eines Medienobjektes wiedergeben.

Um während der Fahrt eine sichere und rasche Auswahl eines Menüanzeigeobjektes auf einem relativ kleinen Display eines Kraftfahrzeuges zu ermöglichen, ist vorzugsweise vorgesehen, dass während der Fahrt nicht alle ersten Menüanzeigeobjekte, insbesondere eines Typs (beispielsweise alle Titelnamen) gleichzeitig dargestellt werden, sondern nacheinander beispielsweise im Rahmen eines so genannten Scroll-Verfahrens dargestellt werden. Dagegen kann vorgesehen sein, dass während des Stillstandes alle zweiten Menüanzeigeobjekte, insbesondere eines Typs (beispielsweise alle Titelnamen), gleichzeitig dargestellt werden, um dem Fahrer die von seinem Home-Entertainment-System gewohnte Auswahl von zweiten Menüanzeigeobjekten zu ermöglichen.

Eine bevorzugte Ausgestaltung sieht vor, dass Medienobjekte (Titel) jeweils Medienteilobjekte (Kapitel) umfassen, wobei die Steuereinrichtung derart eingerichtet ist, dass die Wiedergabe von Medienobjekten zumindest während der Fahrt des Kraftfahrzeuges, insbesondere nach der Auswahl, dem Einlegen, der Aktivierung oder dem Start eines Speichermediums, wie einer DVD, automatisch mit dem Medienobjekt beginnt, das die meisten Medienteilobjekte enthält. Dadurch wird erreicht, dass ohne Bedieneingriff durch den Fahrer mit hoher Wahrscheinlichkeit automatisch das Medienobjekt (Titel) wiedergegeben wird, das sich der Fahrer wünscht. Denn in der Regel ist das Medienobjekt mit den meisten Medienteilobjekten auch das Haupt-Medienobjekt oder der eigentliche Inhalt der DVD.

Um einem Fahrer während der Fahrt eine möglichst zielgerichtete und rasche Auswahl eines Medienobjektes ohne Darstellung der zweiten Menüanzeigeobjekte, die ja insbesondere jeweils einen Namen eines Medienobjektes umfassen, zu ermöglichen, sieht eine bevorzugte Weiterbildung vor, dass basierend auf einer Medienobjektposition (beispielsweise Titelnummer) und einer Medienteilobjektposition innerhalb eines Medienobjektes (beispielsweise Kapitelnummer innerhalb eines Titels) eine Medienteilobjektposition innerhalb des Speichermediums (beispielsweise Kapitelnummer innerhalb einer DVD) generiert und einem entsprechenden Medienteilobjekt zugeordnet wird, und diese auf der Anzeigeeinrichtung als erstes Menüanzeigeobjekt dargestellt wird.

Alternativ oder ergänzend dazu ist für eine sichere und einfache Auswahl eines Medienobjektes ohne Darstellung der zweiten Menüanzeigeobjekte vorgesehen, dass gleichzeitig mit der Darstellung eines ersten Menüanzeigeobjektes (beispielsweise Titelnummer), welches ein Medienobjekt (beispielsweise Titel) repräsentiert, die Anzahl der Medienteilobjekte (beispielsweise Kapitel) dargestellt wird, welche von dem Medienobjekt umfasst sind. Denn selbst wenn der Name eines Medienobjektes aus oben genannten Gründen während der Fahrt nicht dargestellt werden kann, so gibt die auch während der Fahrt verfügbare und darstellbare weitere Information über Anzahl der Medienteilobjekte eines Medienobjektes einen Hinweis auf Bedeutung, Art und gegebenenfalls sogar den Inhalt des entsprechenden Medienobjektes.

Im Folgenden wird die Erfindung anhand von Beispielen unter Bezugnahme auf die folgenden Figuren näher erläutert:
- Figur 1: zeigt eine schematische Darstellung eines Kraftfahrzeuges;
- Figur 2: zeigt ein vereinfachtes Ablaufdiagramm;
- Figur 3: zeigt eine schematische Darstellung der Datenstruktur einer DVD;
- Figur 4: zeigt eine Darstellung von zweiten Menüanzeigeobjekten wäh- rend des Stillstandes des Kraftfahrzeuges;
- Figur 5: zeigt eine Darstellung von ersten Menüanzeigeobjekten wäh- rend der Fahrt des Kraftfahrzeuges.

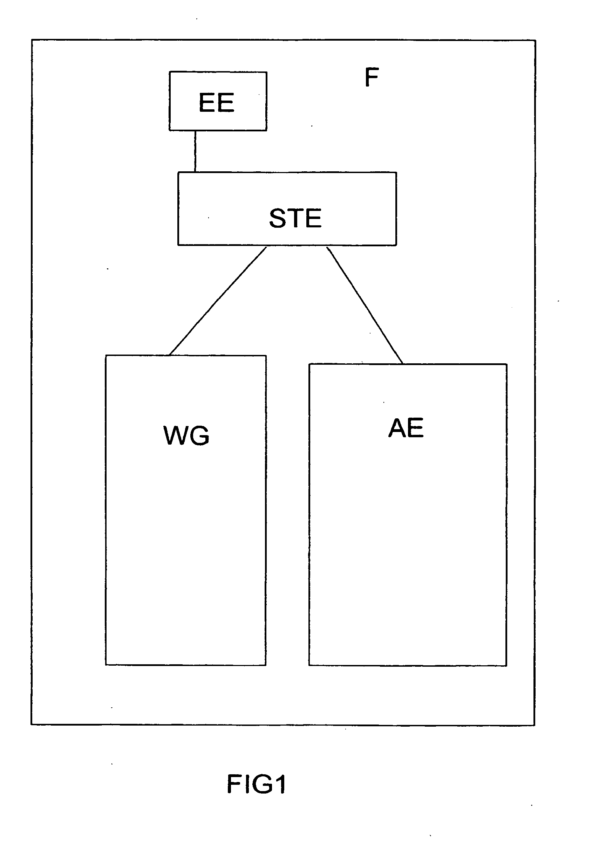

Figur 1 zeigt ein Kraftfahrzeug F, das mit einer Anzeigeeinrichtung AE, wie einem Grafikdisplay, einer Medienwiedergabeeinrichtung WG, wie einem DVD-Player, einer Eingabeeinrichtung EE, wie einem Dreh-Druckknopf, und einer damit verbundenen Steuereinrichtung STE ausgestattet ist.

Die Steuereinrichtung STE kann dabei auch Bestandteil der Anzeigeeinrichtung AE, der Medienwiedergabeeinrichtung WG und/oder der Eingabeeinrichtung EE sein bzw. die Anzeigeeinrichtung AE, die Medienwiedergabeeinrichtung WG und/oder die Eingabeeinrichtung EE können zumindest teilweise mittels der Steuereinrichtung STE realisiert oder gesteuert werden.

Die Steuereinrichtung STE ist als programmgesteuerte Prozessoreinrichtung oder als anwendungsspezifische integrierte Schaltung ausgeführt und derart ausgestaltet, dass während der Fahrt des Kraftfahrzeuges F automatisch erste Menüanzeigeobjekte auf der Anzeigeeinrichtung AE dargestellt werden, und während des Stillstandes des Kraftfahrzeuges F automatisch zweite Menüanzeigeobjekte auf der Anzeigeeinrichtung AE dargestellt werden.

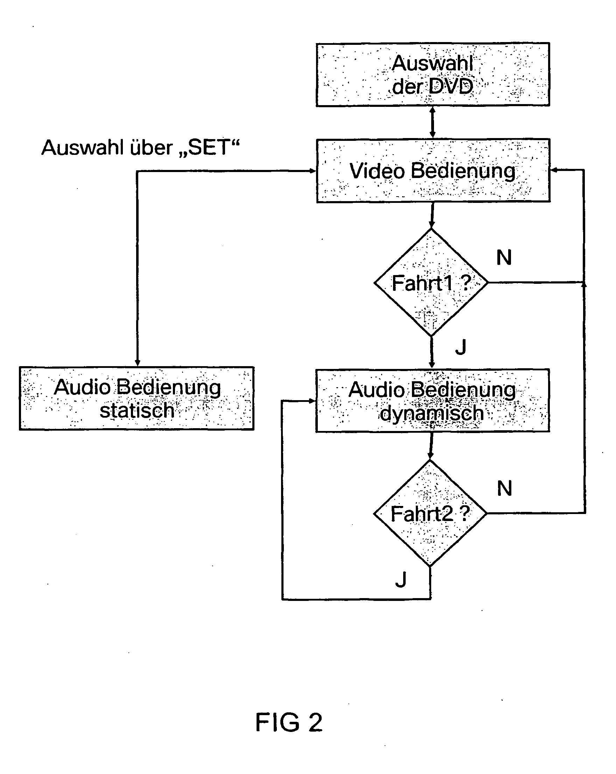

Figur 2 zeigt als Teil eines vereinfachten Bedienprozesses Schritte einer Anzeige von Auswahlmenüs zur Auswahl von auf einem Speichermedium gespeicherten Medienobjekten.

Nach der Auswahl einer DVD über eine Benutzerschnittstelle (Eingabeeinrichtung; Anzeigeeinrichtung) durch den Nutzer ("Auswahl der DVD") erfolgt die Anzeige von zweiten Menüanzeigeobjekten als Video ("Video Bedienung").

Es wird ständig überprüft, ob das Kraftfahrzeug fährt oder steht ("Fahrt1 ?"). Solange das Kraftfahrzeug steht ("N"), werden Medienobjekte über die Anzeige und Auswahl von zweiten Menüanzeigeobjekten ausgewählt oder aktiviert ("Video Bedienung"). Ergibt eine entsprechende Überprüfung ("Fahrt1 ?"), dass das Kraftfahrzeug fährt ("J"), so wird von der Anzeige zweite Menüanzeigeobjekte automatisch auf die Anzeige erster Menüanzeigeobjekte ("Audio Bedienung dynamisch") umgeschaltet.

Ergibt in diesem Zustand eine entsprechende Überprüfung ("Fahrt2 ?"), dass das Kraftfahrzeug steht ("N"), so wird von der Anzeige erster Menüanzeigeobjekte automatisch auf die Anzeige zweiter Menüanzeigeobjekte ("Video Bedienung") umgeschaltet. Solange das Kraftfahrzeug fährt ("J"), werden Medienobjekte über die Anzeige und Auswahl erster Menüanzeigeobjekte ("Audio Bedienung dynamisch") ausgewählt oder aktiviert.

Wenn beispielsweise im Stop-and-Go-Verkehr die ständige automatische Umschaltung zwischen der Anzeige erster Menüanzeigeobjekte ("Audio Bedienung dynamisch") und der Anzeige zweiter Menüanzeigeobjekte. ("Video Bedienung") als störend empfunden wird, kann der Fahrer durch die Betätigung einer Taste oder die Auswahl eines besonderen Menüanzeigeobjektes ("SET") in eine ständige Anzeige erster Menüanzeigeobjekte ("Audio Bedienung statisch") zur Auswahl von Medienobjekten umschalten.

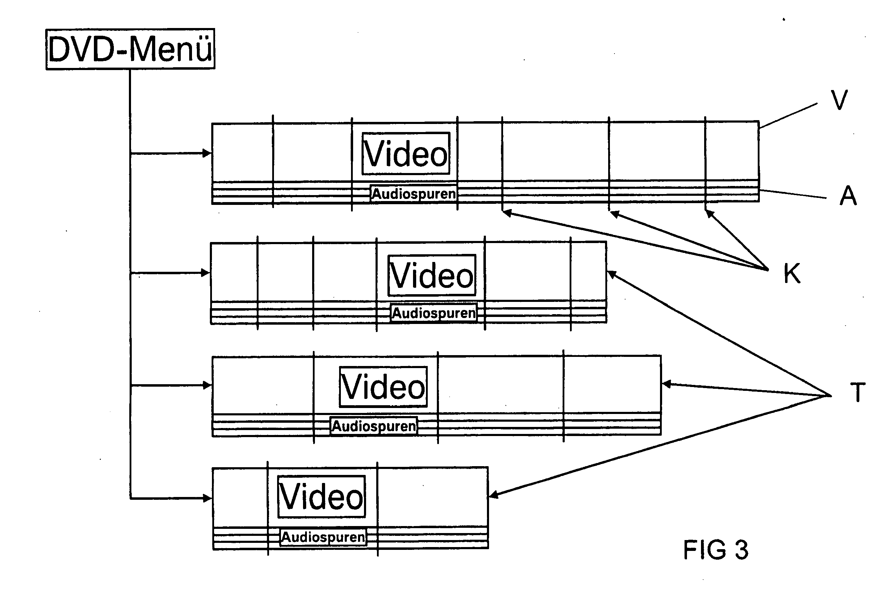

Figur 3 zeigt die Datenstruktur einer DVD, die derart ausgeführt ist, dass von einem "DVD-Menü", das die Anzeige zweiter Menüanzeigeobjekte umfasst, auf verschiedene Medienobjekte T (Titel) verwiesen wird, die jeweils eine Vielzahl von Medienteilobjekten K (Kapitel) umfassen. Durch die Auswahl eines Menüanzeigeobjektes wird auf das diesem Menüanzeigeobjekt zugeordnete Medienobjekt zugegriffen, und dieses wiedergegeben. Die verschiedenen Medienobjekte T können jeweils mehrere Videoinhalte V und mehrere Audioinhalte A umfassen.

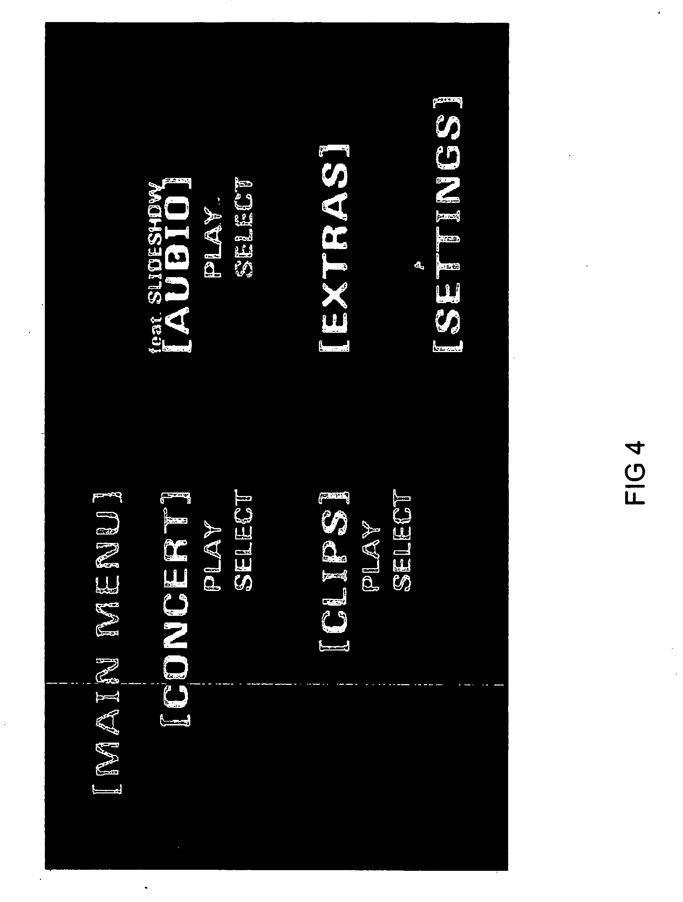

Figur 4 zeigt exemplarisch ein Auswahlmenü einer DVD-Video, bei dem als zweite Menüanzeigeobjekte die Namen von Titeln (CONCERT, AUDIO, CLIPS, EXTRAS, SETTINGS) auf eine DVD-spezifische Art, basierend auf - in einem Videoformat abgespeicherten - Informationen als Video dargestellt werden. Beispielsweise sind Schrifttyp, Schriftfarbe und/oder Anordnung der Menüanzeigeobjekte im Wesentlichen unabhängig von dem Medienwiedergabegerät, der Steuereinrichtung oder der Anzeigeinrichtung, sondern typisch für die momentan eingelegte oder ausgewählte DVD.

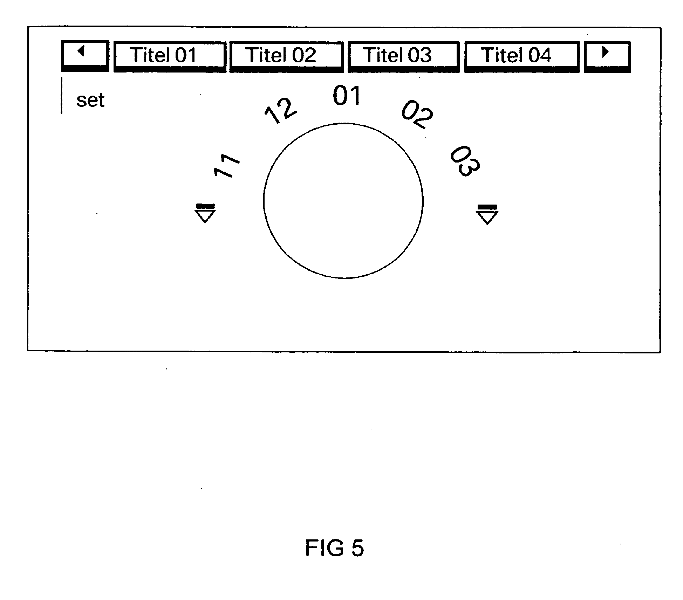

Figur 5 zeigt dagegen exemplarisch ein Auswahlmenü einer DVD-Video, bei dem erste Menüanzeigeobjekte (TITEL01, TITEL02, TITEL03, TTEL04), welche jeweils ein Medienobjekt, wie einen Titel, repräsentieren, auf eine kraftfahrzeug-, steuereinrichtungs- oder wiedergabeeinrichtungsspezifische Art dargestellt werden. Beispielsweise sind Schrifttyp, Schriftfarbe und/oder Anordnung der Menüanzeigeobjekte im Wesentlichen unabhängig von der momentan eingelegten oder ausgewählten DVD, sondern typisch für das Kraftfahrzeug, das Medienwiedergabegerät, die Steuereinrichtung oder die Anzeigeeinrichtung. Die Zahlen (11,12,01,02,03) repräsentieren jeweils ein Medienteilobjekt, wie beispielsweise ein Kapitel, und können ebenfalls als erste Menüanzeigeobjekte aufgefasst werden.

Ergänzend dazu kann vorgesehen sein, dass zudem die Nummer des aktuell ausgewählten Titels und die Nummer des aktuell ausgewählten Kapitels gleichzeitig dargestellt werden, und/oder dass den Titeln zugeordnet jeweils die Anzahl der von einem Titel umfassten Kapitel dargestellt ist.

## Patentansprüche

1. Kraftfahrzeug (F),
- mit einer Anzeigeeinrichtung (AE),
- mit einem Medienwiedergabegerät (WG) zur Wiedergabe von auf einem Speichermedium gespeicherten Medienobjekten und
- mit einer Steuereinrichtung (STE), die derart eingerichtet ist,
dass während der Fahrt des Kraftfahrzeuges automatisch erste Menüanzeigeobjekte auf der Anzeigeeinrichtung (AE) darstellbar sind,
dass während des Stillstandes des Kraftfahrzeuges automatisch zweite Menüanzeigeobjekte auf der Anzeigeeinrichtung (AE) darstellbar sind, darduch **gekennzeichnet**, dass die zweiten Menüanzeigeobjekte auf eine Art darstellbar sind, die für das Speichermedium spezifisch ist und/oder dass ersten Menüanzeigeobjekte auf eine Art darstellbar sind, die für das Fahrzeug, insbesondere die Steuereinrichtung, spezifisch ist.

2. Kraftfahrzeug (F) nach Anspruch 1,
bei dem durch die Auswahl eines Menüanzeigeobjektes die Wiedergabe eines Medienobjektes ausgelöst wird.

3. Kraftfahrzeug (F) nach einem der vorhergehenden Ansprüche,
bei dem jeweils einem Medienobjekt zumindest ein Menüanzeigeobjekt zugeordnet ist.

4. Kraftfahrzeug (F) nach einem der vorhergehenden Ansprüche,
bei dem die zweiten Menüanzeigeobjekte in einem Videoformat abgespeichert sind oder als Video dargestellt werden.

5. Kraftfahrzeug (F) nach einem der vorhergehenden Ansprüche,
bei dem die Medienobjekte Audioobjekte und Videoobjekte umfassen, wobei die Steuereinrichtung derart eingerichtet ist, dass das Medienwiedergabegerät während der Fahrt des Kraftfahrzeuges für die Wiedergabe der Videoobjekte gesperrt ist.

6. Kraftfahrzeug (F) nach einem der vorhergehenden Ansprüche,
bei dem die Medienobjekte gemäß dem DVD-Video-Standard auf dem Speichermedium abgespeichert sind.

7. Kraftfahrzeug (F) nach einem der vorhergehenden Ansprüche,
mit einer Eingabeeinrichtung (EE), durch welche die ersten bzw. zweiten Menüanzeigeobjekte auswählbar sind.

8. Kraftfahrzeug (F) nach einem der vorhergehenden Ansprüche,
bei dem auf dem Speichermedium Namen von Medienobjekten, insbesondere in einem Videoformat, abgespeichert sind, wobei zumindest ein zweites Menüanzeigeobjekt auf dem Namen eines Medienobjektes basiert, und wobei zumindest ein erstes Menüanzeigeobjekt nicht auf dem Namen eines Medienobjektes basiert.

9. Kraftfahrzeug (F) nach einem der vorhergehenden Ansprüche,
bei dem die Medienobjekte jeweils Medienteilobjekte umfassen, wobei die Steuereinrichtung derart eingerichtet ist, dass die Wiedergabe von Medienobjekten zumindest während der Fahrt des Kraftfahrzeuges automatisch mit dem Medienobjekt beginnt, das die meisten Medienteilobjekte enthält.

10. Kraftfahrzeug (F) nach einem der vorhergehenden Ansprüche,
bei dem die Medienobjekte jeweils Medienteilobjekte umfassen, wobei die Steuereinrichtung derart eingerichtet ist, dass einem Medienteilobjekt basierend auf einer Medienobjektposition und einer Medienteilobjektposition innerhalb eines Medienobjektes eine Medienteilobjektposition innerhalb des Speichermediums zugeordnet wird, und diese auf der Anzeigeeinrichtung dargestellt wird.

11. Kraftfahrzeug (F) nach einem der vorhergehenden Ansprüche,
bei dem mit der Darstellung eines ersten Menüanzeigeobjektes, welches ein Medienobjekt repräsentiert, gleichzeitig die Anzahl der Medienteilobjekte dargestellt wird, welche von dem Medienobjekt umfasst sind.

## Claims

1. A motor vehicle (F),
- with a display device (AE),
- with a media playback unit (WG) for playing back media objects stored on a storage medium and
- with a control device (STE), which is set up in such a way that when the motor vehicle is travelling, first menu display objects can be shown automatically on the display device (AE),
in that second menu display objects can be shown automatically on the display device (AE) when the motor vehicle is at a standstill, **characterised in that** the second menu display objects can be shown in a way that is specific to the storage medium and/or **in that** the first menu display objects can be shown in a way that is specific to the vehicle, more especially the control device.

2. A motor vehicle (F) according to claim 1, wherein the playback of a media object is triggered by the selection of a menu display object.

3. A motor vehicle (F) according to any one of the preceding claims, wherein a menu display object is in each case assigned to at least one media object.

4. A motor vehicle (F) according to any one of the preceding claims, wherein the second menu display objects are stored in a video format or are shown as a video.

5. A motor vehicle (F) according to any one of the preceding claims, wherein the media objects comprise audio objects and video objects, wherein the control device is set up in such a way that the media playback unit is blocked for playing back the video objects motor when the vehicle is travelling.

6. A motor vehicle (F) according to any one of the preceding claims, wherein the media objects are stored on the storage medium in accordance with the DVD video standard.

7. A motor vehicle (F) according to any one of the preceding claims, with an input device (EE), by means of which the first or second menu display objects can be selected.

8. A motor vehicle (F) according to any one of the preceding claims, wherein names of media objects, more especially in a video format, are stored on the storage medium, wherein at least a second menu display object is based on the name of a media object, and wherein at least a first menu display object is not based on the name of a media object.

9. A motor vehicle (F) according to any one of the preceding claims, wherein the media objects in each case comprise media part objects, wherein the control device is set up in such a way that the playback of media objects, at least when the motor vehicle is travelling, automatically begins with the media object which contains the most media part objects.

10. A motor vehicle (F) according to any one of the preceding claims, wherein the media objects in each case comprise media part objects, wherein the control device is set up in such a way that a media part object position within the storage medium is assigned to a media part object based on a media object position and a media part object position within a media object, and said media part object position is shown on the display device.

11. A motor vehicle (F) according to any one of the preceding claims, wherein the number of media part objects comprised by the media object is shown simultaneously with the showing of a first menu display object, which represents a media object.

## Revendications

1. Véhicule automobile (F) comportant :
- une installation d'affichage (AE),
- un appareil de reproduction d'un milieu (WG) pour reproduire des objets d'un milieu enregistré sur un support de mémoire, et
- une installation de commande (STE) conçue pour que
- pendant le déplacement du véhicule automobile, automatiquement des premiers objets d'affichage de menu apparaissent sur l'installation d'affichage (AE), et
- pendant l'arrêt du véhicule automobile, des seconds objets d'affichage du menu apparaissent automatiquement sur l'installation d'affichage (AE),
véhicule **caractérisé en ce que**
les seconds objets d'affichage de menu sont représentés d'une manière spécifique au milieu d'enregistrement et/ou
les premiers objets d'affichage de menu sont représentés d'une manière spécifique au véhicule, notamment à l'installation de commande.

2. Véhicule automobile (F) selon la revendication 1,
**caractérisé en ce que**
la reproduction d'un objet du milieu est déclenchée par la sélection d'un objet d'affichage du menu.

3. Véhicule automobile (F) selon l'une des revendications précédentes,
**caractérisé en ce qu'**
au moins un objet d'affichage du menu est associé à chaque objet du menu.

4. Véhicule automobile (F) selon l'une des revendications précédentes,
**caractérisé en ce que**
les seconds objets d'affichage du menu sont enregistrés sous un format vidéo ou sont représentés sous forme de vidéo.

5. Véhicule automobile (F) selon l'une des revendications précédentes,
**caractérisé en ce que**
les objets du milieu comprennent des objets audio et des objets vidéo, et l'installation de commande est conçue pour que l'appareil de reproduction du milieu soit bloqué pour la reproduction des objets vidéo lorsque le véhicule automobile est en déplacement.

6. Véhicule automobile (F) selon l'une des revendications précédentes,
**caractérisé en ce que**
les objets du milieu sont enregistrés selon le standard vidéo DVD sur un milieu d'enregistrement.

7. Véhicule automobile (F) selon l'une des revendications précédentes,
**caractérisé par**
une installation d'entrée (EE) permettant de sélectionner les premiers ou les seconds objets d'affichage du menu.

8. Véhicule automobile (F) selon l'une des revendications précédentes,
**caractérisé en ce que**
des noms d'objets du milieu sont enregistrés sur le milieu d'enregistrement, notamment au format vidéo, et
au moins un second objet d'affichage de menu est fondé sur le nom d'un objet du milieu, et
au moins un premier objet d'affichage du menu n'est pas fondé sur le nom d'un objet du milieu.

9. Véhicule automobile (F) selon l'une des revendications précédentes,
**caractérisé en ce que**
les objets du milieu comportent chacun des objets partiels du milieu, l'installation de commande est conçue pour que la reproduction des objets du milieu, au moins pendant le déplacement du véhicule automobile, commence automatiquement par l'objet du milieu comportant le plus grand nombre d'objets partiels du milieu.

10. Véhicule automobile (F) selon l'une des revendications précédentes,
**caractérisé en ce que**
les objets du milieu comportent chacun des objets partiels du milieu,
l'installation de commande est conçue pour qu'en fonction d'une position d'objet du milieu et d'une position d'objet partiel du milieu dans un objet du milieu, un objet partiel du milieu soit associé à une position d'objet partiel du milieu dans le milieu d'enregistrement et que celui-ci soit représenté par l'installation d'affichage.

11. Véhicule automobile (F) selon l'une des revendications précédentes,
**caractérisé en ce que**
par la représentation d'un premier objet d'affichage du menu qui représente un objet du milieu, on représente en même temps le nombre des objets partiels du milieu appartenant à l'objet du milieu.
